# EUROPEAN PATENT SPECIFICATION

(11) **EP 4 474 029 B1**
(45) Date of publication and mention of the grant of the patent: **08.07.2026**
(21) Application number: 24171091.2
(22) Date of filing: 18.04.2024
(51) Int. Cl.: A63F 13/235, A63F 13/332, A63F 13/335

(54) **CONTROLLER APPARATUS, SYSTEMS AND METHODS**
STEUERGERÄTEVORRICHTUNG, SYSTEME UND VERFAHREN
APPAREIL DE COMMANDE, SYSTÈMES ET PROCÉDÉS

(30) Priority: 12.05.2023 GB 202307073
(43) Date of publication of application: 11.12.2024
(73) Proprietor: Sony Interactive Entertainment Inc., Tokyo 108-0075 (JP)
(72) Inventor: WALKER, Andrew, London, W1F 7LP (GB); SMITH, Alexei, London, W1F 7LP (GB)
(74) Representative: D Young & Co LLP

(56) References cited:
- US-A1- 2020 179 803
- US-A1- 2020 406 129
- US-A1- 2022 379 199
- US-A1- 2022 391 344

## Description

### Field of the Disclosure

The present disclosure relates to the field of processing data, and more particularly to processing video images. In particular, the present disclosure relates to apparatus, systems and methods for generating composite video images.

### Background

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Conventional video game controllers designed for use with video game consoles typically output signals to a video game console using a wired and/or short range wireless communication (e.g. Bluetooth^{®}). Due to factors such as size and weight, video game consoles often tend to be used at a single location, such as a user's home environment. Video game controllers that are suitable for being used with such video game console are therefore also restricted to use at a same location as the video game console.

Previously proposed arrangements are disclosed in: US 2022/379199 A1, US 2020/406129 A1, US 2020/179803 A1, and US 2022/391344 A1. US 2022/379199 A1 describes a game controller configured to selectively pair with a companion device using a first communication protocol and one or more gaming systems using a second communication protocol.

It is in this context that the present disclosure arises.

### Summary

Various aspects and features of the present invention are defined in the appended claims and within the text of the accompanying description. The invention is defined by the appended set of claims.

### Brief Description of the Drawings

The present technique will be described further, by way of example only, with reference to embodiments thereof as illustrated in the accompanying drawings, in which:
Figure 1 is a schematic diagram illustrating an example of an entertainment device;
Figure 2 is a schematic diagram illustrating an example of a video game controller;
Figure 3 is a schematic diagram illustrating a handheld video game controller having first and second communication modes; and
Figure 4 is schematic diagram illustrating the first and second communication modes;
Figure 5 is a schematic diagram illustrating the handheld video game controller and an example of a first networked device;
Figure 6 is a schematic diagram illustrating a handheld video game controller comprising a rechargeable power source;
Figures 7a and 7b are schematic diagrams illustrating example of systems; and
Figure 8 is a schematic flowchart illustrating a method.

Embodiments of the invention will now be described, by way of example only, with reference to the accompanying drawings, in which:

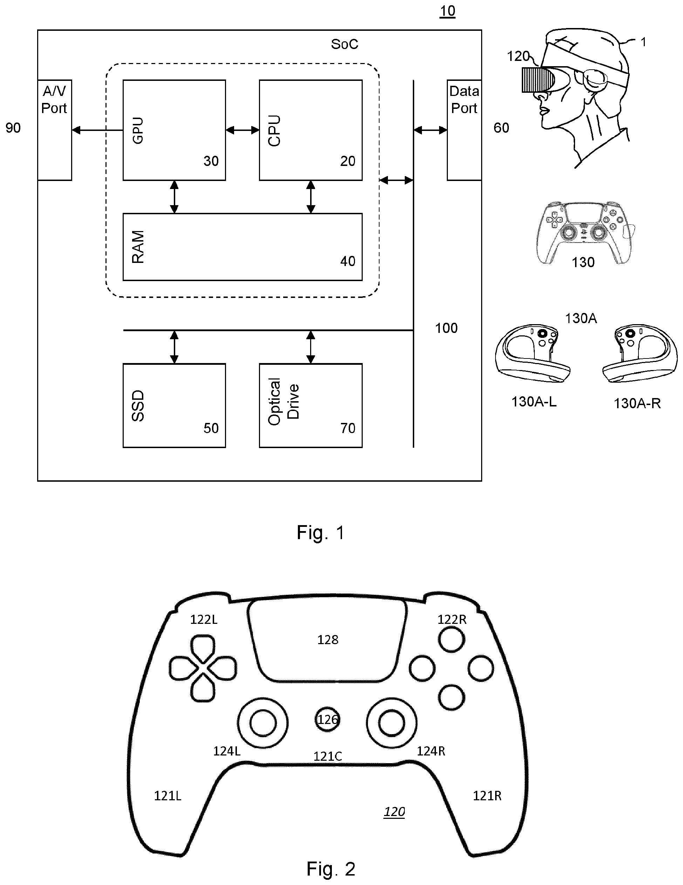

Figure 1 schematically illustrates an example entertainment device such as the Sony^{®} PlayStation 5^{®} (PS5) entertainment device.

The entertainment device 10 comprises a central processor (CPU) 20. This may be a single or multi core processor, for example comprising eight cores as in the PS5. The entertainment device also comprises a graphical processing unit (GPU) 30. The GPU can be physically separate to the CPU, or integrated with the CPU as a system on a chip (SoC) as in the PS5.

The entertainment device also comprises RAM 40, and may either have separate a random access memory (RAM) for each of the CPU and GPU, or shared RAM as shown in Figure 1. Both the CPU and the GPU thus have access to RAM. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit and/or receive data via one or more data ports 60, such as a universal serial bus (USB) port, Ethernet^{®} port, Wi-Fi^{®} port, Bluetooth^{®} port, Wi-Fi ^{®} port or similar, as appropriate. It may also optionally receive data via an optical drive 70.

Audio/visual outputs from the entertainment device are typically provided through one or more A/V ports 90, such as an HDMI port, or through one or more of the wired or wireless data ports 60.

An example of a device for displaying images output by the entertainment system is a head mounted display 'HMD' 120, such as the PlayStation VR 2 'PSVR2', worn by a user 1.

Where components are not integrated, they may be connected as appropriate either by a dedicated data link or via a bus 100.

Interaction with the entertainment device is typically provided using one or more handheld controllers (130, 130A), such as the DualSense^{®} controller (130) in the case of the PS5, and/or one or more VR controllers (130A-L, 130A-R) in the case of the HMD.

Figure 1 therefore provides an example of an entertainment device suitable for performing processing for executing a video game and generating video images and audio for output to a user. The entertainment device may for example generate images for display by a display device such as television and/or head mounted display unit 120.

In Figure 2, a DualSense ^{®} controller 120 is illustrated as an example of a handheld video game controller. Such a controller typically has two handle sections 121L, 121R and a central body 121C. Various input elements are distributed over the controller, in some cases in in local groups. Examples include a left button group 122L, which may comprise directional controls and/or one or more shoulder buttons, and similarly right button group 122R, which comprise function controls and/or one or more shoulder buttons. The controller also includes left and/or right control sticks 124L, 124R, which may optionally also be operable as buttons by pressing down on them.

The controller (typically in the central portion of the device) may also comprise one or more system buttons 126, which typically cause interaction with an operating system of the entertainment device rather than with a game or other application currently running on it; such buttons may summon a system menu, or allow for recording or sharing of displayed content. Furthermore, the controller may comprise one or more other elements such as a touchpad 128, a light for optical tracking (not shown), a screen (not shown), haptic feedback elements (not shown), and the like.

The inventors have appreciated that there is a need to improve video game controllers that are suitable for being used with video game consoles. Conventional video game controllers designed for use with video game consoles typically output signals to a video game console using a wired and/or short range wireless communication (e.g. Bluetooth^{®}). Due to factors such as size and weight, video game consoles often tend to be used at a single location, such as a user's home environment. As a consequence of this lack of portability, video game controllers that are suitable for being used with such video game console are also typically restricted to such use, even though such controllers are smaller in size and weight and may in some cases have their own internal power source. It would therefore be desirable for video game controllers that are suitable for being used with video game consoles to be capable of also being used in other settings.

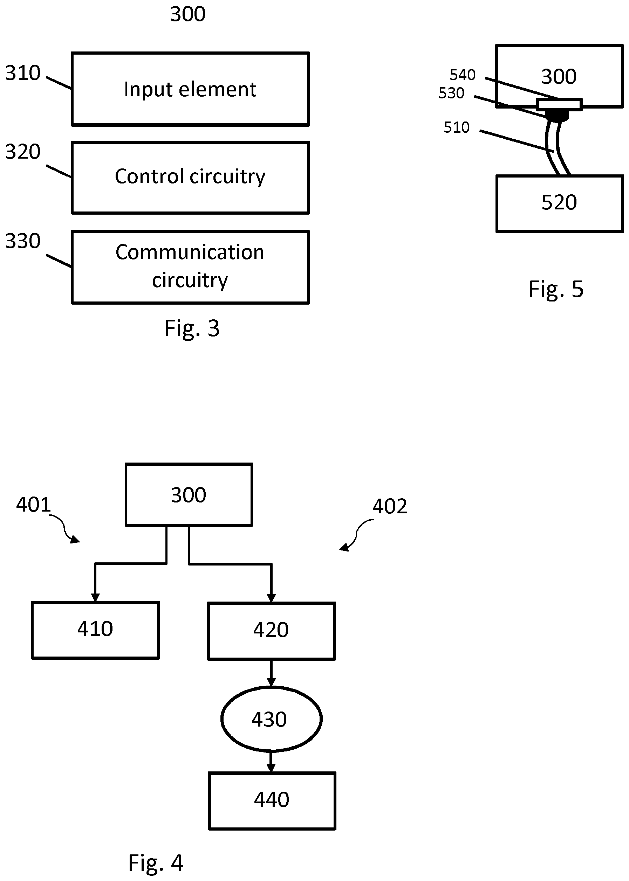

Figure 3 schematically illustrates a handheld video game controller 300 in accordance with embodiments of the disclosure. The controller 300 comprises one or more user-operable input elements 310, control circuitry 320 and communication circuitry 330.

The one or more user input elements 310 may for example comprise any of the user-operable input elements discussed previously with respect to Figure 2. In particular, in some embodiments of the disclosure the one or more user-operable input elements 310 comprise one or more from the list consisting of: one or more buttons; one or more control sticks; and one or more touchpads. In use, the user operates one or more buttons, touchpads and/or control sticks, from which operations the control circuitry 320 generates controller data to be communicated by the communication circuitry 330. Hence, controller data indicative of operation of one or more of the user-operable input elements is generated by the control circuitry 320 and communicated by the communication circuitry 330 according to the techniques to be discussed below. The controller may comprise a power switch for powering on and off the controller. For example, a hold operation with respect to a button (e.g. system button 126) may be used for powering on and powering off the controller.

The controller 300 is operable according to a first communication mode and a second communication mode. For the first communication mode, the communication circuitry 330 is configured to transmit the controller data directly to a video game console as a destination device for the controller data. For the second communication mode, the communication circuitry 330 is configured to transmit the controller data via a plurality of networked devices to a video game processing device as the destination device for the controller data. Hence, the controller 300 has the first communication mode and the second communication mode and this can allow the controller to be used directly with a video game console when a video game console is available for use by a user (e.g. when the user is at home and the controller can communicate directly with the game console) and the controller can be used in settings in which a video game processing device (e.g. a video game console or server) is not directly available to the user (e.g. when the user is not at home and the controller cannot directly communicate with game console at the user's home location).

In particular, the controller 300 is operable according to the second communication mode and this can allow use of the controller, which is capable of being used directly with a video game console when operating in the first communication mode, for playing a video game in a range of different settings where a user may have access to a display device without having direct access to a video game console.

For the second communication mode, the controller data is communicated via a plurality of networked devices to a video game processing device such as a remotely located video game console or a remote server of a cloud-gaming platform. Therefore, a video game can be executed by a remote video game processing device in accordance with the controller data.

In the following discussion, references to a remotely located video game console refer to the case in which the controller communicates the controller data via a plurality of networked devices to that video game console. For example, a user may use the controller at a first location (such as a friend's house or a work location or a hotel or so on) and the remote video game console may be located at a second location (such as the user's home location), and the controller data can be communicated via a plurality of networked devices (potentially comprising a number of wireless router devices) to the remote video game console as a destination device for the controller data so that a video game can be executed by the remote video game console in accordance with the controller data. More generally, for the second communication mode, the controller data is communicated via a plurality of networked devices to a video game processing device which may be a server device or a video game console.

Output data associated with the execution of the video game (including image data and optionally audio data) can be communicated from the video game processing device for output by a display device (and optionally speakers) that are local to the user. The output data may be communicated via a same path (same networked devices) as that used for communicating the controller data or possibly a different path may be used. Such techniques are discussed in more detail later.

Using the output data, images can be generated and output for display by a display device viewed by the user associated with the controller 300, and controller data from the controller can be used for updating the execution state of the video game for allowing playing of the video game. In this way, use of the controller 300 and potentially just a display device (e.g. a television or more particularly a smart television, or a smartphone device or tablet device) can allow a video game to be played.

Figure 4 is schematic diagram illustrating an example of the first and second communication modes for the controller 300. The first communication mode 401 is schematically shown on the left of Figure 4. For the first communication mode 401, the communication circuitry 330 is configured to transmit the controller data directly to a video game console 410 as a destination device for the controller data. For the first communication mode, the communication circuitry 330 may transmit the controller data using one or more of a wired and a wireless (e.g. Bluetooth^{®}) communication with the video game console 410.

Therefore, for the first communication mode 401, the video game console 410 receives the controller data directly from the controller and executes a video game in accordance with the received controller data. The video game console 410 typically has an associated display device (not shown in Figure 4) for outputting images for displaying the video game to the user. In some embodiments of the disclosure, the video game console 410 may communicate controller feedback data to the controller 300 using the same connection so that one or more of haptic data and audio data can be provided to the controller 300 for output by one or more haptic interfaces and/or one or more audio output devices of the controller 300.

The second communication mode 402 is schematically shown on the right of Figure 4. For the second communication mode 402, the communication circuitry 330 is configured to transmit the controller data via a plurality of networked devices to a video game processing device 440 as the destination device for the controller data. In the example shown in Figure 4, the controller 300 communicates the controller data directly to a first networked device 420 which interfaces with a network 430.

The first networked device 420 may for example be a router of a wireless local area network (WLAN), which interfaces with another network 430 that is a wide area network (WAN), such as the internet. Hence, in some examples, the controller 300 may directly communicate the controller data to a router. In other examples, the first networked device 420 may be a mobile device (e.g. a mobile phone device, a mobile tablet device, mobile hotspot device) which communicates the controller data to one or more of a base station of a cellular network and a router of a wireless local area network. In other examples, the first networked device 420 may be a display device (e.g. a television, or more specifically a smart television) which communicates the controller data to a router of a wireless local area network. In other examples, the first networked device 420 may be a base station of a cellular network. Hence, in some examples, the controller 300 may directly communicate the controller data to a base station of a cellular network (mobile communications network), for example using a wireless communication protocol such as 3G, 4G or 5G. Hence, in the arrangement of Figure 4, the first networked device 420 may interface with a network 430 such as one or more of a wireless local area network and a wireless wide area network.

For the second communication mode 402, the communication circuitry 330 can optionally communicate the controller data directly to the first networked device 420 using a wireless communication protocol comprising one or more from the list consisting of: Bluetooth^{®}, Zigbee^{®}, Wi-Fi^{®}, 3G, 4G and 5G. The first networked device 420 is operable to communicate the controller data to one or more other networked devices with the video game processing device 440 (e.g. a remote server or video game console) being the destination device for the controller data.

The above discussion with respect to Figure 4 refers to the case in which the communication circuitry 330 supports a wireless communication protocol to be used for the second communication mode for allowing the controller 300 to communicate directly with the first networked device 420.

In some examples, the first communication mode and the second communication mode may both use a same wireless communication protocol (e.g. Bluetooth^{®} or Zigbee^{®}). In this case, the first and second communication modes differ by virtue of the controller communicating directly with a video game console (e.g. 410) for the first mode, and instead communicating directly with a first networked device (e.g. 420) that does not have video game processing capability for the second mode, and the destination device for the transmitted controller data being different for the two communication modes.

In particular, for the second communication mode, a Bluetooth^{®} and Wi-Fi^{®} enabled networked device (such as a smartphone or smart television) may act as first networked device 420 so as to firstly receive the controller data based on a Bluetooth^{®} (or wired) communication protocol, and then forward the controller data to a Wi-Fi^{®} router of a local wireless network for forwarding to a WAN, or as appropriate transmit the controller data via a mobile phone data connection.

In some embodiments of the disclosure, for the first communication mode, the communication circuitry 330 is configured to wirelessly transmit the controller data according to a first wireless communication protocol (e.g. Bluetooth^{®} or Zigbee^{®}), and for the second communication mode, the communication circuitry 330 is configured to wirelessly transmit the controller data according to a second wireless communication protocol (e.g. Wi-Fi ^{®}, 3G, 4G, 5G), wherein communication according to the first wireless communication protocol has a shorter range than communication according to the second wireless communication protocol. Hence, the communication circuitry 330 may support at least two wireless communication protocols, with the second wireless communication protocol being used for the second communication mode so that an increased communication range is available for communicating with a networked device such as a router or a base station as the first networked device 420.

In some embodiments of the disclosure, for the first communication mode, the communication circuitry is configured to transmit the controller data using first packets, in which each first packet specifies an identifier for identifying the video game console as the destination device, and wherein for the second communication mode, the communication circuitry is configured to transmit the controller data using second packets, in which each second packet specifies an identifier for identifying the video game processing device as the destination device. Packets may thus be transmitted comprising controller data and one or more identifiers for uniquely identifying a networked device as a destination device for the packets. For example, one or more of an IP address and a media access control (MAC) address may be specified by the packets.

However, for the second communication mode, the communication circuitry 330 is configured to transmit the controller data directly to the first networked device 420 via a wired connection with the first networked device. The controller 300 is connected to the first networked device 420 using a wired connection protocol such as the universal serial bus (USB) or Ethernet protocol. Hence, the controller data can be communicated to the first networked device 420 via the wired connection, and the first networked device 420 interfaces with a wireless network. For example, the first networked device 420 may be a Wi-Fi^{®} enabled device that communicates the controller data to a router of a wireless local area network, and/or a mobile communications enabled device that communicates the controller data to a base station of a cellular network.

More generally, for the second communication mode, the controller data can be transmitted using the wired connection with the first networked device 420, and hence a wireless communication protocol supported by the first networked device 420 can be used for wirelessly communicating the controller data to a next networked device for forwarding to the video game processing device 440 as the destination device. Consequently, the controller 300 itself may only be required to support the above mentioned first wireless communication protocol that is capable of being used for directly communicating with the video game console 410, and the second wireless communication protocol having the greater communication range can be provided using a wired connection with the first networked device 420. Consequently, the technical specifications of the controller 300 can potentially be simplified to allow more cost effective manufacturing of the controller, and the controller can supplemented with the first networked device 420 when required.

In some embodiments of the disclosure, the handheld video game controller 300 comprises a receptacle connector to receive a plug connector associated with the first networked device. Figure 5 schematically shows an example in which the controller 300 is connected to the first networked device 520 using the wired connection 510 (e.g. a USB connection) and the controller 300 comprises a receptacle connector 540 for receiving a plug connector 530. In the schematic diagram of Figure 5, the plug connector 530 is shown as being inserted into the receptacle connector 540.

Figure 4 shows an example in which the controller 300 transmits controller data to directly to the first networked device 420 via a wireless communication, whereas Figure 5 shows an example in which the controller 300 transmits controller data to directly to the first networked device 520 via the wired connection 510. In some examples, the device 420 as shown in Figure 4 may be replaced with the device 520 as shown in Figure 5 so that the device 520 interfaces with the network 430.

Hence more generally, the controller 300 may comprise a receptacle connector (e.g. USB port and/or Ethernet port) for facilitating the controller 300 in being connected to the first networked device. The controller data can be sent via the receptacle connector to the first networked device which interfaces with a wireless network such as a Wi-Fi^{®} network or mobile communications network. Therefore, the controller 300 itself need not support a wireless communication protocol for interfacing with such a network. This can be particularly beneficial in that the controller 300 can be simplified and thus manufactured more cost effectively, and the device 520 can be disconnected from the controller when not in use and connected when such use is desired.

In some embodiments of the disclosure, the first networked device 520 is a wireless network adapter device comprising a wireless network interface controller (WNIC) for connecting to one or more of a router associated with a wireless local area network and a base station of a cellular network. A wireless network adapter device such as a USB dongle for wirelessly connecting to a wireless router and/or a base station of a cellular network may be connected to the receptacle connector of the controller 300 for receiving the controller data via a wired connection and wirelessly communicating the controller data so that the controller data is sent to the video game processing device 420 as the destination device.

In the example of Figure 5, the wired connection is schematically shown as having a length between the controller 300 and the device 520. However, in some examples the device 520 may be a wireless network adapter device in the form of a so-called dongle having a rigid housing attached directly to the plug connector.

The receptacle connector 540 may be formed in a portion of an exterior surface of a handheld controller, such as an underside of the central body 121C of the DualSense ^{®} controller 120 shown in Figure 2. Alternatively or in addition, a receptacle connector 540 may be formed in a portion of the exterior surface that is facing away from the user when holding the controller in a normal manner and located between the shoulder buttons of the DualSense ^{®} controller 120. In this way, a wireless network adapter device (e.g. in the form of a dongle) with a housing which may be of a length in the range 1 cm to 10 cm may be connected to the receptacle connector 540 without interfering with use of the controller 300 by a user. The receptacle connector 540 and plug connector 530 may take any suitable form and in some examples may be a female USB connector and a male USB connector, respectively, and as such mating of these two connectors may serve to releasably secure the wireless network adapter device to the controller 300.

In some embodiments of the disclosure, at least one of the controller 300 and the first networked device 520 comprises one or more releasable attachment members to releasably secure the controller 300 and the first networked device 520. The releasable attachment member(s) may take the form of one or more straps (e.g. rubberised straps). For example, the first networked device 520 may comprise a housing for the electrical components with a wire extending from the housing to the connector plug. The housing may for example have a disc-like shape and may be capable of being held flat against a portion of the exterior surface of the controller 300 by one or more of the attachment members. More generally, the housing of the first networked device 520 may be releasably secured to a portion of the exterior surface such that the first networked device 520 does not move freely relative to the exterior surface and does not hinder use of the controller 300. By releasably securing a housing with a relatively flat profile (e.g. disc shaped housing) to a portion of the exterior surface, the presence of the housing may go unnoticed by a user during normal use of the controller or may have a feeling of being part of the controller. In particular, a back surface of the housing may be made from a material (and optionally colour) that is the same as that of the material used for manufacturing the exterior surface of the controller.

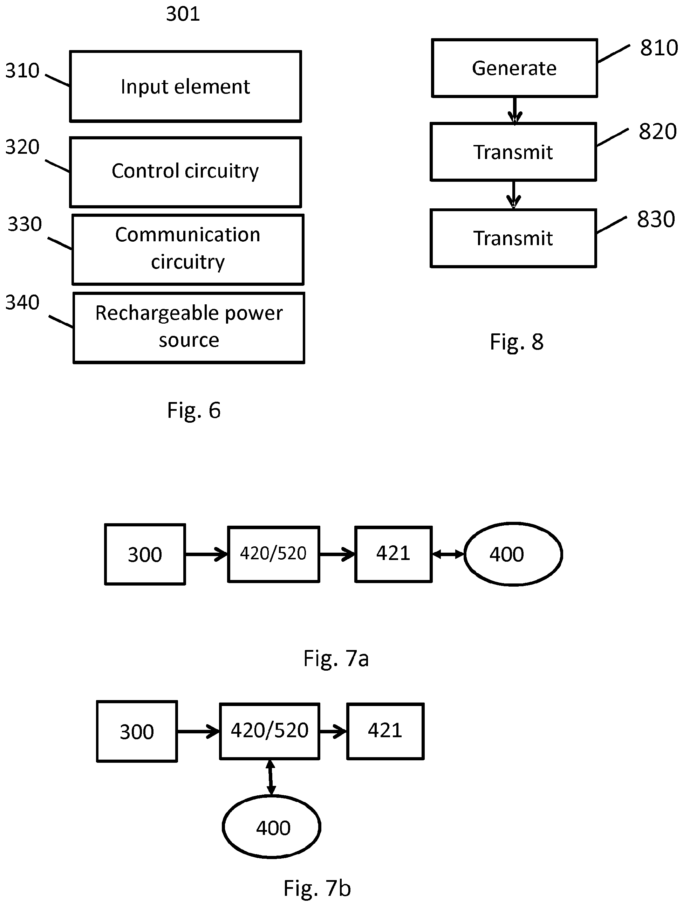

In some embodiments of the disclosure, the controller 300 comprises a rechargeable power source. Figure 6 schematically illustrates an example in which a handheld video game controller 301 comprises the one or more user-operable input elements 310, the control circuitry 320, the communication circuitry 330 and a rechargeable power source 340. The controller 301 may comprise one or more rechargeable power sources 340 for powering various circuit components of the controller 301, including the control circuitry 320, the communication circuitry 330 and any other circuitry associated with the user-operable inputs elements. Circuit components associated with the one or more user-operable input elements, such as those associated with buttons, control sticks and touch panels can be powered using the rechargeable power source. Of course, the controller 301 may also be capable of being connected to an external power supply and power from such a supply may be used for powering the components as well as recharging the power source.

References throughout this disclosure to the controller 300 also refer to the controller 301, and similarly references to the controller 301 also refer to the controller 300, such that any of the disclosed techniques can be applied using any of the controllers 300 and 301.

The controller may thus comprise the receptacle connector (e.g. 540) for allowing the controller to be connected to an external power source for recharging the rechargeable power source 340. Alternatively or in addition, the controller may support wireless inductive charging. The techniques involving recharging the rechargeable power source and transmitting the controller data may be performed using a same receptacle connector (e.g. 540). Hence, in some examples the controller comprises a single receptacle connector capable of being used for both of these purposes.

The controller may thus be able to operate with full functionality without requiring an external power supply. As explained in more detail later, in some embodiments the controller 300, 301 further comprises a haptic interface comprising one or more actuators and/or one or more audio output devices, and these components may also be powered using the rechargeable power source 340. The rechargeable power source 340 may comprise one or more rechargeable batteries (e.g. lithium-ion battery) with any suitable capacity. For example, a rechargeable battery with a capacity in the range 1-10 Ah may be used.

In some embodiments of the disclosure, the rechargeable power source 340 is configured to provide power to the first networked device 520. The rechargeable power source 340, which is otherwise used for powering the circuitry components of the controller, may also provide power to the first networked device 520 via the wired connection (e.g. 510) with the first networked device 520. For example, USB or Power over Ethernet (PoE) may be supported by the receptacle connector 540 so that the receptacle connector 540 can be used for communicating the controller data to the device 520 and also for powering the device 520. Hence, the first networked device 520 may not comprise a rechargeable power source and/or may not be connected to an external power supply source (e.g. mains power supply) and may rely on power from the controller 300. Hence, referring to the example of Figure 5, the wired connection 510 may be used for transmission of the controller data and also power to the device 520.
Referring again to the above discussion with respect to the second communication mode 402 in Figure 4, in some embodiments of the disclosure the communication circuitry 330 is configured to wirelessly transmit the controller data directly to the first networked device 420, and the first networked device may be one of: controller data directly to a first networked device that is one selected from the list consisting of: a mobile device for connecting to at least one of a base station of a cellular network and a router or a local area network; the base station of the cellular network; the router of the wireless local area network; and a display device for connecting to the router of the wireless local area network. For example, a mobile device such as the device 520 in Figure 5, a mobile phone device, a tablet device and a mobile hotspot device may wirelessly receive the controller data from the controller 300. A display device such as a smart television may receive the controller data from the controller 300

As explained above, the communication circuitry 330 may in some cases support at least two wireless communication protocols, with the second wireless communication protocol being used for the second communication mode so that an increased communication range is available for communicating with a networked device such as a router or a base station. In some embodiments of the disclosure, the controller 300 comprises a network interface controller for interfacing with the network 430 which may be one or more of a local area network and a cellular network for mobile communications. For example, at least some of the functionality that may have been provided by the previously mentioned network adapter device (e.g. as shown in Figure 5) may be included in the controller 300. The controller 300 may thus directly transmit the controller data to a networked device such as a router or a base station.

Hence, in some embodiments of the disclosure, the network adapter device as shown in Figure 5 may be provided as a separate unit which can be connected to the receptacle connector of the controller for interfacing with the network 430. In other embodiments, the communication protocol of the network adapter device as shown in Figure 5 may be supported by the communication circuitry 330 such that in this case the controller interfaces directly with a network such as a local area network and/or cellular network.

Figures 7a and 7b schematically illustrate examples of systems. In Figure 7a, the system comprises the controller 300, the first networked device 420 (or 520) and a display device 421 configured to interface with a network 400. The controller 300 transmits the controller data to the device 420/520 via one of a wired (e.g. USB) and a wireless communication (e.g. Bluetooth^{®}). The device 420/520 transmits the controller data to the display device 421 via one of a wired (e.g. USB) and a wireless communication (e.g. Bluetooth^{®}). The display device 421 transmits the controller data via the network 400 (e.g. a local area network). Of course, in some examples, the first networked device 420/520 may be omitted from the system in Figure 7a and the controller 300 may communicate directly with the display device 421 via a wired and/or wireless communication, according to the techniques discussed above. Hence more generally, the controller 300 can be configured to transmit the controller data to the display device 421 which interfaces with the network 400. The display device 421 can thus transmit the controller data via the network 400 to the remote video game processing device, and the display device 421 can receive output data generated by the remote video game processing device via the network 400. Hence, the display device 421 receives the output data and generates images for display in dependence on the output data. In particular, the display device, when transmitting the controller data, may associate one or more identifiers (e.g. IP address and/or MAC address) of the display device with the controller data. In this way, output data generated by the remote video game processing device can be transmitted to the display device for display to the user.

In Figure 7b, the system comprises the controller 300, the first networked device 420 (or 520) and the display device 421, in which the first networked device 420/520 is configured to interface with the network 400. Of course, in a manner similar to that discussed above, the first networked device 420/520 may be omitted from the system in Figure 7b and the controller 300 may interface directly with network 400 (e.g. by communicating directly with a router of a local area network) according to the techniques discussed above. Therefore, in this example the device 420/520 (or the controller 300) can transmit the controller data via the network 400 to the remote video game processing device. The device 420/520 (or the controller 300) can receive the output data generated by the remote video game processing device via the network 400 and forward the received output data to the display device 421 for generating images for display in dependence on the output data. Hence, Figures 7a and 7b represent examples of two systems comprising at least the controller and a display device whereby a user associated with the controller can play a video game using a remotely located video game processing device which receives controller data via the network 400 and generates output data which is used for displaying images at the display device.

Referring to Figures 7a and 7b, the device 520 may be plugged into a receptacle connector of the controller 300 and wirelessly transmit data according to a wireless communication protocol. Alternatively, the device 520 may be plugged into a receptacle connector of the display 421 and may wirelessly receive the controller data from the controller 300 according to a wireless communication protocol.

One or more user interface images can be caused to be displayed by the display device 421 for setting up a session for a video game to be played using the remote video game processing device. In particular, images for a menu screen can be displayed by the display device 421 such that a user associated with the controller 300 can view the images and, using the controller, provide controller data for selecting a video game (e.g. a video game title to be played).

For example, any of the controller 300, the device 420/520 or the display device 421 may execute a software application and generate user interface images for use in setting up a gaming session to be played using a remote video game console or a remote server. The controller 300 or the device 420/520 may comprise such software. In some examples, the device 420 may be a smartphone device and images can be displayed thereon for assisting in setting up of the session for the video game to be played. Alternatively or in addition, the device 520 may provide images for display by the display device 421. Alternatively or in addition, a software application associated with the display device 421 (in the case of a smart television) may be executed for displaying such images.

More generally, a software application can be executed for displaying user interface images comprising one or more game selection menus, and the user can provide the controller data to select a video game using the controller. In some examples, the software application may relate to a specific gaming platform, such as the PlayStation^{®} gaming platform, and the user may enter their login details to access their account (PlayStation^{®} Network account) for the gaming platform. The user's account can thus be accessed to allow selection by the user of a video game associated with their user account. Such video games may be single player or multiplayer and the type of game (e.g. first person shooter, sports game and so on) is not particularly limited. For example, the user may be able to select to play a previously played video game from a last saved point. Hence, the user can carry on from where they previously stopped playing the video game. In some examples, a selected video game may relate to a live online multiplayer video game to be executed by a cloud gaming server.

Therefore, by displaying one or more user interface images, the user can select a videogame to be played, which may be a video game installed on their video game console or a video game to be executed by a remote server. In response to the selection of the video game, one or more test signals can be communicated to a video game processing device (e.g. video game console or remote server) associated with that video game. The association of the selected video game with a given video game processing device may use information available to the software application and/or in some cases information for identifying the user's game console may be stored by the controller 300 and/or the device 420/520. For example, in the case where the user selects a video game that is installed on their video game console, the one or more test signals can be transmitted for requesting a response from the video game console to determine whether the video game console is in a powered state and/or available for being connected to. Responsive to receiving the response from the video game console, the game session for the selected video game can be initiated with the controller data being transmitted from the controller via a plurality of networked devices to the video game console as the destination device. Alternatively, the selected game may relate to a game for which server execution is required and accordingly test signals can be transmitted to one or more remote servers known to be associated with the selected game.

In some cases a user may select a video game which is capable of being executed by two or more candidate video game processing devices. In such cases, one or more tests signals can be communicated to the candidate video game processing devices for determining which one to select as the destination device for executing the session for the video game. For example, a given video game may be capable of being executed by a remote video game console and a remote server, and tests signals may be sent to each of these devices for determining which of the devices is better suited to being used for the video game. Techniques for communicating test signals to candidate devices are discussed in more detail later.

In some embodiments of the disclosure, for the second communication mode, the communication circuitry is configured to receive one or more of haptic data and audio data from the video game processing device, the controller comprising one or more of a haptic interface comprising one or more actuators to provide a haptic interaction in response to the haptic data and an audio output device to output audio in response to the audio data. Some video games can be executed to provide controller feedback data comprising one or more of haptic data and audio data. For the second communication mode, as well as generating the output data for displaying images, the execution of the video game may also generate controller feedback data. The controller feedback data can be received by the controller (e.g. from the device 420/520). The control circuitry 320 can be configured to generate control signals for controlling one or more of the haptic interface and the audio output device (e.g. one or more audio speakers) in dependence on the controller feedback data. Therefore, haptic interaction and/or audio can be provided to the user of the controller for providing a more immersive experience when playing the video game.

In some embodiments of the disclosure, for the second communication mode, the communication circuitry 330 is configured to transmit the controller data to a remote video game console via at least two networked devices comprising at least one wireless local area network router. A communication path from the controller 300 to the remote video game console may use a router device at the location of the remote video game console and/or a router device at the location of the controller. For example, the controller 300 (or a networked device using a wired connection with the controller) may communicate the controller data directly to a base station of a cellular network and the remote video game console may receive the controller data from a router device that communicates directly with the remote video game console. Alternatively or in addition, the controller 300 (or a networked device using a wired connection with the controller) may communicate the controller data directly or indirectly to a router device (e.g. a router for a LAN at the location of the controller) which interfaces with a WAN, and the remote video game console may receive the controller data from a router device that communicates directly with the remote video game console.

The following discussion refers to using the second communication mode to transmit controller data to a destination device that is a remote video game console that has been previously used with the controller.

In some embodiments of the disclosure, the controller is configured to store an identifier for identifying a video game console having been previously used (e.g. paired) with the controller. This identifier can be stored by the controller and used for specifying a destination device for the controller data when operating in the second mode of communication. In this way, a previously used video game console can be used as a remote video game processing device for playing a video game. The controller may comprise any suitable storage circuitry (e.g. any suitable nonvolatile memory) to store one or more identifiers (also referred to as identification information) for a video game console with which the controller has been previously used.

Therefore, for the second communication mode, the communication circuitry can transmit the controller data using packets each specifying the identifier for identifying the remote video game console so that the controller data is transmitted via the plurality of networked devices to the remote video game console having been previously used with the handheld video game controller.

A user may initially use the controller at their home location to play a video game using their video game console. At a later time, when the user is at a different location for which communication directly with the video game console is not possible, the controller may still be capable of being used for playing a video game by using the video game console at the home location.

Hence, when used with a given video game console, the controller may store one of more identifiers for the given video game console which can be used at a later time for allowing controller data to be sent to the given video game console. For example, when being used with a video game console, the controller may store information for a media access control (MAC) address for the video game console. In particular, one or more of an IP address, a WiFi^{®} MAC address and a Bluetooth^{®} MAC address may be stored for the video game console.

The controller may be used with a video game console by pairing the controller with the video game console. Any suitable pairing process may be used for this. For example, as part of an initial pairing operation the controller may transmit pairing request packets according to a given communication protocol (e.g. Bluetooth^{®}) specifying one or more identifiers (e.g. a MAC address or other suitable identifier) for the controller. One or more buttons on the controller may be used to initiate the transmission of the pairing request packets so that a user can attempt to pair the controller. In response to this, pairing response packets may be received from the video game console. Subsequently, pairing of the two devices can be completed with the controller storing information for identifying the video game console. Alternatively or in addition, pairing may be achieved using a wired connection. The controller may be connected to the video game console using a wired connection (e.g. USB) and a dedicated button on the controller may be pressed whilst the wired connection is established to thereby pair the two devices.

Once paired the controller can store identification information for identifying the video game console. The stored information can be used so that when operating in the second communication mode, the communication circuitry 330 can communicate the controller data with a destination device being specified using the stored information so that a previously paired video game console can be used as the destination device.

Consequently, in some examples the controller may have been used with a number of respective video game consoles, and may store information for uniquely identifying at least some of the respective video game consoles. Subsequently, a user may desire to play a video game but may only be in possession of the controller and one or more display devices (e.g. a television, tablet device or smartphone device) not capable of running the video game. The controller can thus be operated according to the second communication mode, in which the communication circuitry transmits the controller data with a destination device corresponding to a video game console identified by the information stored by the controller.

In some examples, the controller may store information for identifying only one video game console that has been previously used with the controller. In this case, for the second communication mode, the controller data can be transmitted with that video game console as the destination device. A test signal may be firstly transmitted to the video game console to firstly establish whether connection with that video game console can be established, and in response to receiving a response signal then the controller can proceed to transmit the controller data for use in playing a video game. This is discussed in more detail later.

In other examples, the stored information may identify two or more video game consoles that have each been previously used with the controller. Alternatively or in addition, the stored information may identify at least one video game console that has been previously used with the controller and at least one remote server. The remote server may have been previously used with the controller (e.g. when playing a video game at home using their video game console for which the video game is executed at least partially by the remote server) and/or the controller may have been pre-programmed to store the information for identifying the server. Alternatively or in addition, the stored information may identify two or more such remote servers.

Hence more generally, the controller may store identification information for identifying a plurality of video game processing devices which can be specified as the destination device for the controller data for the second communication mode.

Techniques will now be discussed in which the controller stores information for identifying a plurality of video game processing devices and respective one of the video game processing device is selected to be used as the destination device for the controller data. A decision as to which of the candidate video game processing devices is used as the destination device for the controller for thereby playing a video game may be established in a number of ways.

For example, in addition to storing identification information for a previously used video game console, time information (e.g. one or more timestamps) indicative of a time at which the video game console was last used may also be stored. In some examples, the communication circuitry may firstly transmit one or more test signals specifying a most recently used video game console to test a response time for that video game console. In response to absence of a response signal within a predetermined period of time (indicating that the game console is not switched on and/or is not capable of being connected to), the communication circuitry can proceed to transmit one or more other test signals specifying a next most recently used video game console as the destination device. This processing may be repeated until a response signal is received within a predetermined period of time following the transmission of a test signal. The predetermined period of time can be set appropriately so that when a response signal is received within the predetermined period of time (and therefore a round-trip time is less than or equal to the predetermined period of time), the connection with that video game console is of suitable latency for playing a video game. Hence more generally, video game consoles may be tested in order of most recently used until a video game console with suitable latency is identified.

More generally, the above mentioned technique may be performed either in order of most recently used, or a random order until a response from a video game console is received within the predetermined period of time, and thus has a latency less than or equal to a threshold latency.

More generally, the above mentioned technique may be performed sequentially or in parallel for each of the two or more video game consoles, and a respective video game console for which the response signal indicates a shortest round-trip time may be identified as the game console.

Optionally, in some cases users may opt to allow identification information for their video game console to be shared with a social network of users (e.g. shared with other friends and/or other associated user on the PlayStation^{®} Network) so that their video game console can potentially be used by other users when using their controller in the second mode. In particular, a user can be incentivised to share their identification information for their video game console with a group of users, with the reward being that the user can also access the identification information provided by other users in the group. Hence, a group of users can be established for pooling identification information for a number of video game consoles so that each user in the group can potentially use any of the of video game consoles.

In some embodiments of the disclosure, the communication circuitry is configured to: transmit one or more test signals to a plurality of candidate destination devices for the controller data, each candidate destination device being one of a remote server device and a video game console; and receive one or more response signals from one or more of the plurality of candidate destination devices in response to the test signals, and the handheld video game controller may comprise control circuitry to select a respective candidate destination device as the destination device for the controller data in dependence on one or more of the response signals.

The test signals may be initially transmitted to at least a subset of the plurality of candidate destination devices for which identification information is stored. For example, two or more of the devices may be chosen based on a most recently used or most frequently used criterion and test signals sent thereto. In response to receiving a response signal within the predetermined period of time, then a device associated with that response signal can be selected by the control circuitry as the destination device. If only one of the two or more of the devices satisfies this condition then that device is selected as the destination device. If two or more of the devices satisfy the condition, then a respective device with the shortest response time is selected as the destination device. If none of the tested devices satisfies the condition, then tests signals can be sent to further devices not included in an initial subset.

As explained above, in some examples each of the plurality of candidate destination devices may be a previously used video game console, or each of the plurality of candidate destination devices may be a remote server (e.g. servers used by one or more gaming platforms for one or more cloud-based video games), or the plurality of candidate destination devices may comprise one or more previously used video game console and one or more remote servers. In some examples, at least one of the candidate destination devices may be a video game console associated with another user that is part of a same group of users that have chosen to share their video game console identification information with each other.

In some cases, the communication circuitry may transmit at least one test signal to each of the plurality of candidate destination devices, and an elapsed time between sending a test signal to a given device and receiving a response signal from that given device can be identified, and the elapsed time for each device can be used to select the device having the shortest elapsed time. Transmission of tests signals to each of the plurality of candidate destination devices may be performed in parallel. In some cases, a response signal may not be received from one or more of the devices possibly due to the device not being in a powered state and/or not available for being connected to. Hence, response signals can be received for at least some of the devices and a selection from the devices for which a response signal is received can be performed.

Hence more generally, the tests signals can be transmitted and a destination device selected so that subsequently the controller data can be transmitted to a video game processing device that has been identified based on an evaluation of response times for response signals.

In some embodiments of the disclosure, the controller is configured to operate according to the first communication mode in response to a first operation of one or more of the user-operable input elements, and the handheld video game controller is configured to operate according to the second communication mode in response to a second operation of one or more of the user-operable input elements. Therefore, whether the controller is operated in the first communication mode or the second communication mode can be controlled by operation of one or more of the user-operable input elements by a user. The user can therefore select that the controller is to be operated in the first communication mode at a first time (e.g. when at their home location at which their game console is located) and instead select that the controller is to be operated in the second communication mode at another time (e.g. when away from their home location, such as when staying elsewhere for a business trip or holiday).

For example, a press of an individual button on the controller may be used for activating the first communication mode, and a press of another individual button on the controller may be used for activating the second communication mode. In some examples, a more sophisticated input operation may be required to be performed by the user so as to reduce a likelihood of a user unintentionally activating one of the communication modes. For example, for the first operation for activating the first communication mode, an input such as holding a respective button for at least a threshold amount of time (e.g. a value in the range 5 to 15 seconds) may be required. Similarly, an input such as holding that same respective button or a different respective button for at least a threshold amount of time may be required for activating the second communication mode. In some examples, a combination input (e.g. simultaneously holding two or more buttons optionally for the threshold amount of time) may be set as the operation input for activating the first communication mode, and a same or different combination input may be set as the operation input for activating the second communication mode.

Therefore, through manual operation of the user-operable input elements, the user of the controller can manually control the controller to operate in one of the first communication mode and the second communication mode at a given time.

Alternatively or in addition, one or more automated techniques may be used for selecting the communication mode for the controller.

In some embodiments of the disclosure, the controller is configured to wirelessly transmit one or more packets for attempting to connect the controller with a video game console, and the handheld video game controller is configured to operate according to the second communication mode in response to an absence of a response to the one or more packets within a predetermined period of time. The controller may send packets for attempting to directly connect with a video game console. This may be in response to an operation of one of more of the user-operable inputs and/or in response to the controller initially being powered on. For example, in response to an input operation by a user, the controller may start sending packets for attempting to directly connect the controller with a video game console. In response to such packets, the controller may receive a response (e.g. one or more response packets) from a video game console when the video game console is present. In this case, the controller can select to operate according to the first communication mode in response to receiving the response from the video game console. However, in response to an absence of a response to the one or more packets within a predetermined period of time, the controller can automatically select to operate according to the second communication mode.

In response to selection of the second communication mode, the controller can initially transmit one or more test signals to one or more video game processing devices for which one or more identifiers are stored, in accordance with any of the techniques discussed previously, so as to select a respective remote video game processing device as the destination device for the controller data. Then once a suitable destination device is identified, gameplay using the destination device can be commenced with the controller data being transmitted to the destination device via a plurality of networked devices.

In some embodiments of the disclosure, a kit of parts comprises: the controller 300; and at least one networked device 520, wherein the networked device comprises a plug connector 530 for being received by a receptacle connector 540 formed in an exterior surface of the handheld video game controller for establishing a wired connection with the handheld video game controller. The controller 300 is thus capable of being used in the first communication mode for transmitting the controller data directly to a video game console. The controller can be supplemented with the networked device 520 by a user physically connecting the receptacle connector and the plug connector so that the controller is capable of being used in the second communication mode for which the controller data is instead transmitted to the networked device 520. Hence, the controller 300 can be fitted with the networked device 520 when desired for use with a video game processing device accessed via a plurality of networked device. When connected, the controller data generated by the controller can be wirelessly communicated by the networked device 520 so as to be communicated to a remote video game processing device for executing a video game. In some embodiments, one or more of the controller 300 and the networked device 520 may comprise one or more releasable attachment members to releasably secure the controller and the networked device, as discussed previously.

Figure 8 is a schematic flowchart illustrating a method for a handheld video game controller comprising one or more user-operable input elements. The method comprises:
generating (at a step 810) controller data indicative of operation of one or more of the user-operable input elements;
for a first communication mode, transmitting (at a step 820,) the controller data directly to a video game console as a destination device for the controller data; and
for a second communication mode, transmitting (at a step 830) the controller data via a plurality of networked devices to a video game processing device as the destination device for the controller data.

It will be appreciated that example embodiments can be implemented by computer software operating on a general purpose computing system. In these examples, computer software, which when executed by a computer, causes the computer to carry out any of the methods discussed above is considered as an embodiment of the present disclosure. Similarly, embodiments of the disclosure are provided by a non-transitory, machine-readable storage medium which stores such computer software.

Thus any required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

## Claims

1. A handheld video game controller (300) comprising:
one or more user-operable input elements (310);
control circuitry (320) to generate controller data indicative of operation of one or more of the user-operable input elements; and
communication circuitry (330);
wherein for a first communication mode, the communication circuitry is configured to transmit the controller data directly to a video game console as a destination device for the controller data; and
wherein for a second communication mode, the communication circuitry is configured to transmit the controller data via a plurality of networked devices to a video game processing device as the destination device for the controller data; **characterised in that**, for the second communication mode, the communication circuitry is configured to transmit the controller data to a first networked device (520) via a wired connection (510) with the first networked device.

2. The handheld video game controller according to claim 1, comprising a receptacle connector to receive a plug connector associated with the first networked device.

3. The handheld video game controller according to claim 1 or claim 2, wherein the first networked device is a wireless network adapter device comprising a wireless network interface controller for connecting to one or more of a router associated with a wireless local area network and a base station of a cellular network.

4. The handheld video game controller according to any preceding claim, comprising a rechargeable power source, wherein the rechargeable power source is configured to provide power to the first networked device via the receptacle connector.

5. The handheld video game controller according to any preceding claim, wherein the video game processing device is one of a remote server device and a remote video game console; preferably wherein the handheld video game controller is configured to store an identifier for identifying the remote video game console, the remote video game console having been previously used with the handheld video game controller; more preferably wherein for the second communication mode, the communication circuitry is configured to transmit the controller data using packets each specifying the identifier for identifying the remote video game console so that the controller data is transmitted via the plurality of networked devices to the remote video game console having been previously used with the handheld video game controller.

6. The handheld video game controller according to any preceding claim, wherein for the second communication mode, the communication circuitry is configured to:
transmit one or more test signals to a plurality of candidate destination devices for the controller data, each candidate destination device being one of a remote server device and a video game console; and
receive one or more response signals from one or more of the plurality of candidate destination devices in response to the test signals, and wherein the control circuitry is configured to select a respective candidate destination device as the destination device for the controller data in dependence on one or more of the response signals; preferably wherein the control circuitry is configured to select the respective candidate destination device associated with a response signal having a shortest response time as the destination device for the controller data.

7. The handheld video game controller according to any preceding claim, wherein the handheld video game controller is configured to operate according to the first communication mode in response to a first operation of one or more of the user-operable input elements, and the handheld video game controller is configured to operate according to the second communication mode in response to a second operation of one or more of the user-operable input elements.

8. The handheld video game controller according to any preceding claim, wherein the handheld video game controller is configured to wirelessly transmit one or more packets for attempting to directly connect the handheld video game controller with a video game console, and the handheld video game controller is configured to operate according to the second communication mode in response to an absence of a response to the one or more packets within a predetermined period of time.

9. The handheld video game controller according to any preceding claim, wherein for the second communication mode, the communication circuitry is configured to receive one or more of haptic data and audio data from the video game processing device, the handheld video game controller comprising one or more of a haptic interface comprising one or more actuators to provide a haptic interaction in response to the haptic data and an audio output device to output audio in response to the audio data.

10. A kit of parts comprising:
the handheld video game controller (300) according to any preceding claim; and
at least one networked device (520), wherein the networked device comprises a plug connector (530) for being received by a receptacle connector (540) formed in an exterior surface of the handheld video game controller for establishing a wired connection (510) with the handheld video game controller.

11. A method for a handheld video game controller according to any one of claims 1 to 9, the method comprising:
generating (810) controller data indicative of operation of one or more of the user-operable input elements;
for a first communication mode, transmitting (820) the controller data directly to a video game console as a destination device for the controller data; and
for a second communication mode, transmitting (830) the controller data via a plurality of networked devices to a video game processing device as the destination device for the controller data; **characterised in that**, for the second communication mode, transmitting the controller data comprises transmitting the controller data to a first networked device via a wired connection with the first networked device.

12. Computer software which when executed by a computer causes the computer to perform the method according to claim 11.

## Patentansprüche

1. Handheld-Videospiel-Controller (300), umfassend:
ein oder mehrere von einem Benutzer betreibbare Eingabeelemente (310);
eine Steuerschaltung (320), um Controller-Daten zu erzeugen, die einen Betrieb eines oder mehrerer der von einem Benutzer betreibbaren Eingabeelemente anzeigen; und
eine Kommunikationsschaltung (330);
wobei für einen ersten Kommunikationsmodus, die Kommunikationsschaltung konfiguriert ist, um die Controller-Daten direkt an eine Videospielkonsole als eine Zielvorrichtung für die Controller-Daten zu übertragen; und
wobei für einen zweiten Kommunikationsmodus, die Kommunikationsschaltung konfiguriert ist, um die Controller-Daten über eine Vielzahl von vernetzten Vorrichtungen an eine Videospielverarbeitungsvorrichtung als die Zielvorrichtung für die Controller-Daten zu übertragen;
**dadurch gekennzeichnet, dass,** für den zweiten Kommunikationsmodus, die Kommunikationsschaltung konfiguriert ist, um die Controller-Daten an eine erste vernetzte Vorrichtung (520) über eine drahtgebundene Verbindung (510) mit der ersten vernetzten Vorrichtung zu übertragen.

2. Handheld-Videospiel-Controller nach Anspruch 1, umfassend einen Aufnahmeverbinder, um einen Steckverbinder aufzunehmen, der mit der ersten vernetzten Vorrichtung verbunden ist.

3. Handheld-Videospiel-Controller nach Anspruch 1 oder 2, wobei die erste vernetzte Vorrichtung eine drahtlose Netz-Adapter-Vorrichtung ist, umfassend einen drahtlosen Netzschnittstellen-Controller zum Verbinden mit einem oder mehreren von einem Router, der mit einem drahtlosen lokalen Netz verbunden ist, und einer Basisstation eines Mobilfunknetzes.

4. Handheld-Videospiel-Controller nach einem der vorstehenden Ansprüche, umfassend eine wiederaufladbare Stromquelle, wobei die wiederaufladbare Stromquelle konfiguriert ist, um der ersten vernetzten Vorrichtung über den Aufnahmeverbinder Strom bereitzustellen.

5. Handheld-Videospiel-Controller nach einem der vorstehenden Ansprüche, wobei die Videospielverarbeitungsvorrichtung eine von einer entfernten Servervorrichtung und einer entfernten Videospielkonsole ist; vorzugsweise wobei der Handheld-Videospiel-Controller konfiguriert ist, um einen Identifikator zum Identifizieren der entfernten Videospielkonsole zu speichern, wobei die entfernte Videospielkonsole zuvor mit dem Handheld-Videospiel-Controller verwendet wurde; mehr bevorzugt wobei für den zweiten Kommunikationsmodus, die Kommunikationsschaltung konfiguriert ist, um die Controller-Daten unter Verwendung von Paketen zu übertragen, die jeweils den Identifikator zum Identifizieren der entfernten Videospielkonsole spezifizieren, sodass die Controller-Daten über die Vielzahl von vernetzten Vorrichtungen an die entfernte Videospielkonsole übertragen werden, die zuvor mit dem Handheld- Videospiel-Controller verwendet wurden.

6. Handheld-Videospiel-Controller nach einem der vorstehenden Ansprüche, wobei für den zweiten Kommunikationsmodus, die Kommunikationsschaltung konfiguriert ist zum:
Übertragen eines oder mehrerer Testsignale an eine Vielzahl von Kandidatenzielvorrichtungen für die Controller-Daten, wobei jede Kandidatenzielvorrichtung eine von einer entfernten Servervorrichtung und einer Videospielkonsole ist; und
Empfangen eines oder mehrerer Antwortsignale von einer oder mehreren der Vielzahl von Kandidatenzielvorrichtungen als Antwort auf die Testsignale und wobei die Steuerschaltung konfiguriert ist, um eine entsprechende Kandidatenzielvorrichtung als die Zielvorrichtung für die Controller-Daten in Abhängigkeit von einem oder mehreren der Antwortsignale auszuwählen; vorzugsweise wobei die Steuerschaltung konfiguriert ist, um die entsprechende Kandidatenzielvorrichtung auszuwählen, die mit einem Antwortsignal verknüpft ist, das eine kürzeste Antwortzeit aufweist, als die Zielvorrichtung für die Controller-Daten.

7. Handheld-Videospiel-Controller nach einem der vorstehenden Ansprüche, wobei der Handheld-Videospiel-Controller konfiguriert ist, um gemäß dem ersten Kommunikationsmodus als Antwort auf einen ersten Betrieb eines oder mehrerer der von einem Benutzer betreibbaren Eingabeelemente betrieben zu werden, und der Handheld-Videospiel-Controller konfiguriert ist, um gemäß dem zweiten Kommunikationsmodus als Antwort auf einen zweiten Betrieb eines oder mehrerer der von einem Benutzer betreibbaren Eingabeelemente betrieben zu werden.

8. Handheld-Videospiel-Controller nach einem der vorstehenden Ansprüche, wobei der Handheld-Videospiel-Controller konfiguriert ist, um ein oder mehrere Pakete zum Versuchen, den Handheld-Videospiel-Controller mit einer Videospielkonsole direkt zu verbinden, drahtlos zu übertragen, und der Handheld-Videospiel-Controller konfiguriert ist, um gemäß dem zweiten Kommunikationsmodus als Antwort auf ein Ausbleiben einer Antwort auf das eine oder die mehreren Pakete innerhalb einer vorbestimmten Zeitspanne betrieben zu werden.

9. Handheld-Videospiel-Controller nach einem der vorstehenden Ansprüche, wobei für den zweiten Kommunikationsmodus, die Kommunikationsschaltung konfiguriert ist, um eines oder mehrere von haptischen Daten und Audiodaten von der Videospielverarbeitungsvorrichtung zu empfangen, der Handheld-Videospiel-Controller umfassend eines oder mehrere von einer haptischen Schnittstelle, umfassend ein oder mehrere Betätigungselemente, um eine haptische Interaktion als Antwort auf die haptischen Daten bereitzustellen, und eine Audioausgabevorrichtung, um Audio als Antwort auf die Audiodaten auszugeben.

10. Bausatz von Teilen, umfassend:
den Handheld-Videospiel-Controller (300) nach einem der vorstehenden Ansprüche; und
mindestens eine vernetzte Vorrichtung (520), wobei die vernetzte Vorrichtung einen Steckverbinder (530) umfasst, um durch einen Aufnahmeverbinder (540) aufgenommen zu werden, der in einer Außenoberfläche des Handheld-Videospiel-Controllers zum Aufbauen einer drahtgebundenen Verbindung (510) mit dem Handheld-Videospiel-Controller ausgebildet ist.

11. Verfahren für einen Handheld-Videospiel-Controller nach einem der Ansprüche 1 bis 9, das Verfahren umfassend:
Erzeugen (810) von Controller-Daten, die den Betrieb eines oder mehrerer der von einem Benutzer betreibbaren Eingabeelemente anzeigen;
für einen ersten Kommunikationsmodus, Übertragen (820) der Controller-Daten direkt an eine Videospielkonsole als eine Zielvorrichtung für die Controller-Daten; und
für einen zweiten Kommunikationsmodus, Übertragen (830) der Controller-Daten über eine Vielzahl von vernetzten Vorrichtungen an eine Videospielverarbeitungsvorrichtung als die Zielvorrichtung für die Controller-Daten; **dadurch gekennzeichnet, dass**
für den zweiten Kommunikationsmodus, das Übertragen der Controller-Daten das Übertragen der Controller-Daten an eine erste vernetzte Vorrichtung über eine drahtgebundene Verbindung mit der ersten vernetzten Vorrichtung umfasst.

12. Computersoftware, die, wenn sie durch einen Computer ausgeführt wird, den Computer veranlasst, das Verfahren nach Anspruch 11 durchzuführen.

## Revendications

1. Contrôleur de jeu vidéo portatif (300) comprenant :
un ou plusieurs éléments d'entrée actionnables par l'utilisateur (310) ;
une circuiterie de commande (320) pour générer des données de contrôleur indiquant un actionnement d'un ou plusieurs parmi les éléments d'entrée actionnables par l'utilisateur ; et
une circuiterie de communication (330) ;
dans lequel, pour un premier mode de communication, la circuiterie de communication est configurée pour transmettre les données de contrôleur directement à une console de jeu vidéo en tant que dispositif de destination pour les données de contrôleur ; et
dans lequel, pour un second mode de communication, la circuiterie de communication est configurée pour transmettre les données de contrôleur par l'intermédiaire d'une pluralité de dispositifs en réseau à un dispositif de traitement de jeu vidéo en tant que dispositif de destination pour les données de contrôleur ;
**caractérisé en ce que,** pour le second mode de communication, la circuiterie de communication est configurée pour transmettre les données de contrôleur à un premier dispositif en réseau (520) par l'intermédiaire d'une connexion filaire (510) avec le premier dispositif en réseau.

2. Contrôleur de jeu vidéo portatif selon la revendication 1, comprenant un connecteur femelle pour recevoir un connecteur mâle associé au premier dispositif en réseau.

3. Contrôleur de jeu vidéo portatif selon la revendication 1 ou la revendication 2, dans lequel le premier dispositif en réseau est un dispositif adaptateur de réseau sans fil comprenant un contrôleur d'interface de réseau sans fil pour la connexion à un ou plusieurs parmi un routeur associé à un réseau local sans fil et une station de base d'un réseau cellulaire.

4. Contrôleur de jeu vidéo portatif selon l'une quelconque revendication précédente, comprenant une source d'alimentation rechargeable, dans lequel la source d'alimentation rechargeable est configurée pour alimenter le premier dispositif en réseau par l'intermédiaire du connecteur femelle.

5. Contrôleur de jeu vidéo portatif selon l'une quelconque revendication précédente, dans lequel le dispositif de traitement de jeu vidéo est l'un parmi un dispositif de serveur distant et une console de jeu vidéo distante ; de préférence, dans lequel le contrôleur de jeu vidéo portatif est configuré pour stocker un identifiant permettant d'identifier la console de jeu vidéo distante, la console de jeu vidéo distante ayant été précédemment utilisée avec le contrôleur de jeu vidéo portatif ; plus préférablement, dans lequel, pour le second mode de communication, la circuiterie de communication est configurée pour transmettre les données de contrôleur à l'aide de paquets spécifiant chacun l'identifiant permettant d'identifier la console de jeu vidéo distante, de sorte que les données de contrôleur sont transmises par l'intermédiaire de la pluralité de dispositifs en réseau à la console de jeu vidéo distante ayant été précédemment utilisée avec le contrôleur de jeu vidéo portatif.

6. Contrôleur de jeu vidéo portatif selon l'une quelconque revendication précédente, dans lequel, pour le second mode de communication, la circuiterie de communication est configurée pour :
transmettre un ou plusieurs signaux de test à une pluralité de dispositifs de destination candidats pour les données de contrôleur, chaque dispositif de destination candidat étant l'un parmi un dispositif de serveur distant et une console de jeu vidéo ; et
recevoir un ou plusieurs signaux de réponse en provenance d'un ou plusieurs dispositifs parmi la pluralité de dispositifs de destination candidats en réponse aux signaux de test, et dans lequel la circuiterie de commande est configurée pour sélectionner un dispositif de destination candidat respectif en tant que dispositif de destination pour les données de contrôleur en fonction d'un ou plusieurs parmi les signaux de réponse ; de préférence, dans lequel la circuiterie de commande est configurée pour sélectionner le dispositif de destination candidat respectif associé à un signal de réponse ayant un temps de réponse le plus court en tant que dispositif de destination pour les données de contrôleur.

7. Contrôleur de jeu vidéo portatif selon l'une quelconque revendication précédente, dans lequel le contrôleur de jeu vidéo portatif est configuré pour fonctionner selon le premier mode de communication en réponse à un premier actionnement d'un ou plusieurs parmi les éléments d'entrée actionnables par l'utilisateur, et le contrôleur de jeu vidéo portatif est configuré pour fonctionner selon le second mode de communication en réponse à un second actionnement d'un ou plusieurs parmi les éléments d'entrée actionnables par l'utilisateur.

8. Contrôleur de jeu vidéo portatif selon l'une quelconque revendication précédente, dans lequel le contrôleur de jeu vidéo portatif est configuré pour transmettre sans fil un ou plusieurs paquets pour tenter de connecter directement le contrôleur de jeu vidéo portatif à une console de jeu vidéo, et le contrôleur de jeu vidéo portatif est configuré pour fonctionner selon le second mode de communication en réponse à une absence de réponse au ou aux paquets pendant une période prédéterminée.

9. Contrôleur de jeu vidéo portatif selon l'une quelconque revendication précédente, dans lequel, pour le second mode de communication, la circuiterie de communication est configurée pour recevoir une ou plusieurs parmi des données haptiques et des données audio en provenance du dispositif de traitement de jeu vidéo, le contrôleur de jeu vidéo portatif comprenant un ou plusieurs parmi une interface haptique comprenant un ou plusieurs actionneurs pour fournir une interaction haptique en réponse aux données haptiques et une dispositif de sortie audio pour émettre des éléments audio en réponse aux données audio.

10. Kit de parties comprenant :
le contrôleur de jeu vidéo portatif (300) selon l'une quelconque revendication précédente ; et
au moins un dispositif en réseau (520), dans lequel le dispositif en réseau comprend un connecteur mâle (530) destiné à être reçu par un connecteur femelle (540) formé dans une surface extérieure du contrôleur de jeu vidéo portatif afin d'établir une connexion filaire (510) avec le contrôleur de jeu vidéo portatif.

11. Procédé pour un contrôleur de jeu vidéo portatif selon l'une quelconque des revendications 1 à 9, le procédé comprenant :
la génération (810) de données de contrôleur indiquant un actionnement d'un ou plusieurs parmi les éléments d'entrée actionnables par l'utilisateur ;
pour un premier mode de communication, la transmission (820) des données de contrôleur directement à une console de jeu vidéo en tant que dispositif de destination pour les données de contrôleur ; et
pour un second mode de communication, la transmission (830) des données de contrôleur par l'intermédiaire d'une pluralité de dispositifs en réseau à un dispositif de traitement de jeu vidéo en tant que dispositif de destination pour les données de contrôleur ; **caractérisé en ce que**,
pour le second mode de communication, la transmission des données de contrôleur comprend la transmission des données de contrôleur à un premier dispositif en réseau par l'intermédiaire d'une connexion filaire avec le premier dispositif en réseau.

12. Logiciel informatique qui, lorsqu'il est exécuté par un ordinateur, amène l'ordinateur à réaliser le procédé selon la revendication 11.
